# EUROPEAN PATENT SPECIFICATION

(11) **EP 3 348 861 B1**
(45) Date of publication and mention of the grant of the patent: **11.11.2020**
(21) Application number: 16843984.2
(22) Date of filing: 30.03.2016
(51) Int. Cl.: F16H 3/14, F16F 15/12, F16H 3/091, F16H 57/12, F16H 57/00, F16H 3/08

(54) **REVERSE DRIVE MECHANISM OF A DRIVING FORCE TRANSMITTING DEVICE FOR A VEHICLE**
MECHNISMUS FÜR RÜCKWÄRTSFAHRT EINER FAHRZEUGANTRIEBSKRAFTÜBERTRAGUNGSVORRICHTUNG
MÉCANISME DE MARCHE ARRIÈRE POUR DISPOSITIF DE TRANSMISSION DE FORCE D'ENTRAÎNEMENT DE VÉHICULE

(30) Priority: 08.09.2015 JP 2015176883
(43) Date of publication of application: 18.07.2018
(73) Proprietor: Aisin Seiki Kabushiki Kaisha, Kariya-shi, Aichi 448-8650 (JP)
(72) Inventor: SAITO Daisuke, Nishio-shi Aichi 445-0006 (JP)
(74) Representative: Cabinet Beau de Loménie
(86) International application number: PCT/JP2016/060568
(87) International publication number: WO 2017/043118

(56) References cited:
- WO-A1-2005/028919
- DE-A1- 3 736 597
- JP-A- 2005 001 466
- JP-A- 2007 303 612
- JP-A- 2015 105 065
- JP-U- H03 130 922
- JP-U- H03 130 922
- US-A1- 2005 204 844

## Description

### TECHNICAL FIELD

This invention relates to a reverse drive mechanism of a driving force transmitting device for a vehicle.

### BACKGROUND OF THE TECHNOLOGY

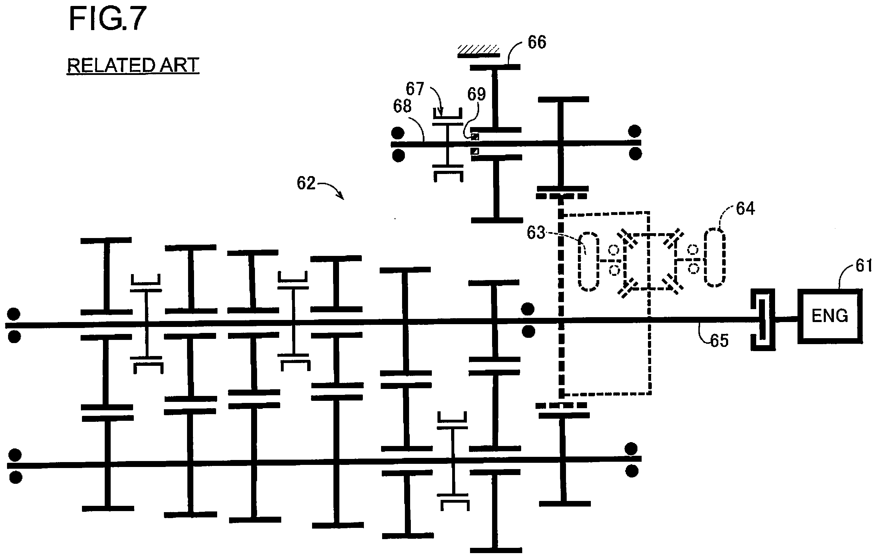

As a related art of a reverse drive mechanism of the driving force transmitting device for a vehicle, an example of the reverse drive mechanism is shown in Fig. 7 which is attached to this application, wherein the reverse drive mechanism is provided with a shaft used exclusively for the reverse drive mechanism in order to shorten the length in an axial direction. According to this related art as shown in Fig. 7, the reverse drive mechanism includes drive wheels 63 and 64 to which a driving force from a driving source such as an engine 61 is transmitted through a transmission 62, a reverse drive gear 66 which is rotatably connected to an input shaft 65 of the transmission 62 and a reverse drive exclusive use shaft 68 rotatably connected to the drive wheels 63 and 64, wherein the reverse drive exclusive use shaft 68 supports the reverse drive gear 66 for relative rotation therewith when the transmission 62 is in a forward drive speed stage and is connected to the reverse drive gear 66 through a reverse drive establishing mechanism 67 when the transmission 62 is in a reverse drive stage.

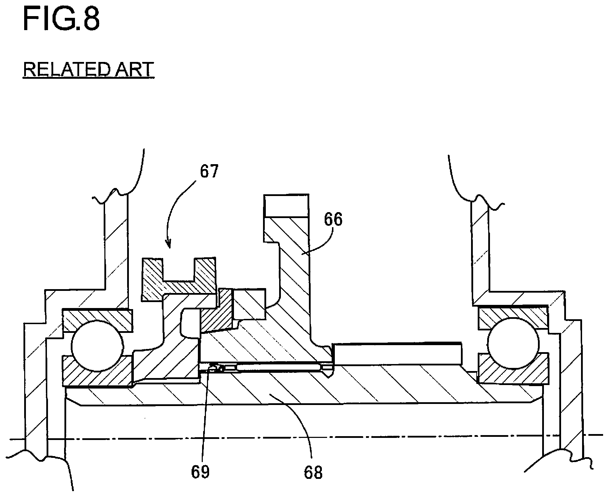

As explained above, the reverse drive gear 66 which is rotatably connected to (always in geared engagement with) the input shaft 65 of the transmission 62 is idly rotated relative to the reverse drive exclusive use shaft 68 (relatively rotatable) when the vehicle is running with a forward speed gear. This will be a cause of generation of vibrations in a radial direction at the reverse drive gear 66 due to a backlash of the reverse drive gear 66 and further a cause of generation of an abnormal noise such as tooth hammering noise derived from such vibrations. Such generations of the vibrations in the radial direction and the abnormal noise such as tooth hammering noise derived from such vibrations can be prevented by the reverse drive mechanism disclosed in the related art as shown in Figs. 7 and 8 by interposing a friction damper 69 between the reverse drive exclusive use shaft 68 and the reverse drive gear 66, thereby applying a backlash reducing torque generated by the frictional movement on the contact surface between the friction damper 69 and the reverse drive gear 66 to the reverse drive gear 66.

It is noted here that the related art is not publicly known by, for example, a patent publication and accordingly, the description on the information regarding to the related art is omitted.

JP 2005 001466 A discloses, in the opinion of the Examining Division of the European Patent Office, a reverse drive mechanism falling within the wording of the pre-characterizing portion of claim 1.

DE 37 36 597 A1 discloses the provision of a friction disc between a gear and a case in order to prevent gear rattling.

US 2005/204844 A1 discloses the provision of an oil seal for applying a frictional load between a shaft and a case in order to prevent gear rattling.

### DISCLOSURE OF INVENTION

### PROBLEMS TO BE SOLVED

According to the structure of the reverse drive mechanism of the related art, since the rotation direction of the reverse drive gear 66 and the rotation direction of the reverse drive exclusive use shaft 68 with the friction damper 69 being interposed therebetween are opposite directions when the vehicle is running with a forward speed gear and the difference in relative rotational speed therebetween becomes extremely large. For example, when the reverse drive gear rotational speed is minus 2000 (-2000) rpm, the rotational speed of the reverse drive exclusive use shaft 68 becomes 12000 rpm. Then the relative rotational speed difference between the reverse drive gear 66 and the reverse drive exclusive use shaft 68 becomes 14000 rpm. The friction damper 69 interposed between the reverse drive gear 66 and the reverse drive exclusive use shaft 68 with such extremely large relative rotational speed difference generates heat and is worn out. Accordingly, an improvement in heat resistance characteristics and the durability has been desired hitherto.

The present invention was made in consideration with the above problems and the object of the invention is to provide a reverse drive mechanism of the driving force transmitting device for a vehicle which can improve the heat resistance characteristics and the durability of the friction damper.

### MEANS FOR SOLVING THE PROBLEMS

This object is solved by a reverse drive mechanism according to claim 1. The dependent claims concern particular embodiments of the invention as defined in claim 1.

### EFFECTS OF THE INVENTION

According to the invention as featured above, since the friction damper is interposed between the reverse drive gear and the case, the relative rotational speed difference between the reverse drive gear and the case becomes extremely small due to the fixed case which is in a non-rotational, stationary state, for example, the relative rotational speed difference drops to 2000 rpm in the absolute value. As a result, the friction damper is interposed between the reverse drive gear and the case where the relative rotational speed difference is extremely small and heat generation as well as wear of the friction damper can be suppressed to improve the heat resistance characteristics and the durability.

### BRIEF EXPLANATION OF ATTACHED DRAWINGS

Fig. 1 is a skeleton view schematically illustrating the structure of the reverse drive mechanism of the driving force transmitting device for a vehicle according to an embodiment of the invention;
Fig. 2 is a longitudinal sectional view of a main part of the reverse drive mechanism of the driving force transmitting device for the vehicle shown in Fig. 1;
Fig. 3 is an explanatory view for explaining the rotational direction of respective gears of the driving force transmitting device for the vehicle under the vehicle running with a reverse drive gear;
Fig. 4 is an explanatory view for explaining the rotational direction of respective gears of the driving force transmitting device for the vehicle under the vehicle running with a forward drive gear;
Fig. 5 is a longitudinal sectional view of a friction damper of the reverse drive mechanism of the driving force transmitting device for the vehicle shown in Fig. 1;
Fig. 6 is a perspective view indicating the external appearance of the case in the driving force transmitting device for the vehicle;
Fig. 7 is a skeleton view schematically illustrating the structure of the reverse drive mechanism of the driving force transmitting device for a vehicle according to a related art; and
Fig. 8 is a longitudinal sectional view of a main part of the reverse drive mechanism of the driving force transmitting device for the vehicle according to the related art shown in Fig. 7.

### THE EMBODIMENTS FOR IMPLEMENTING THE INVENTION

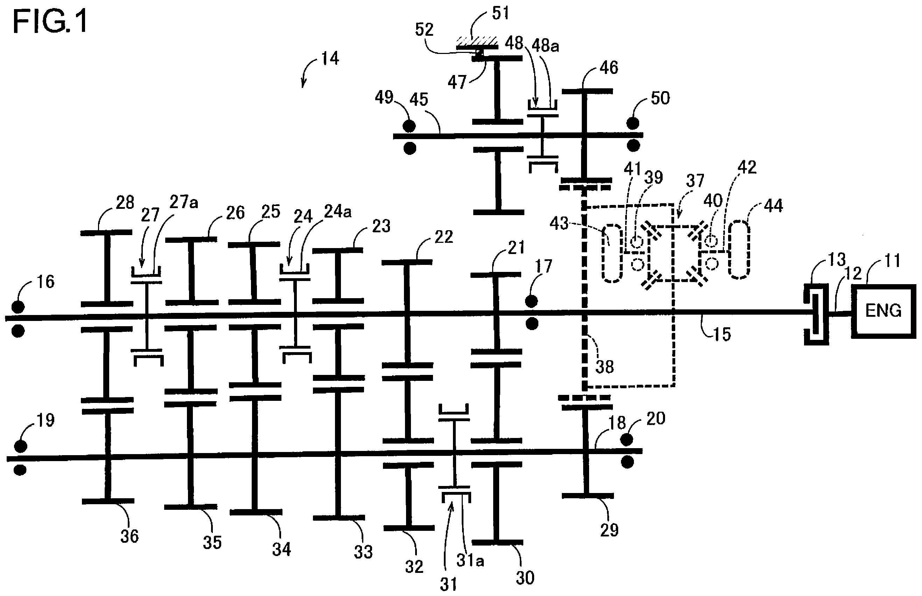

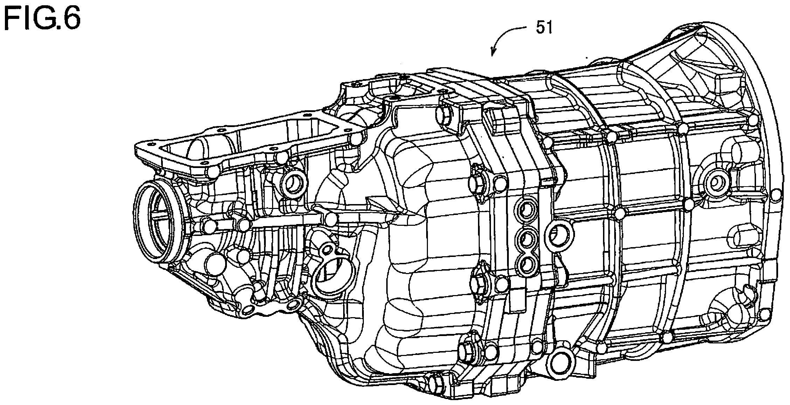

The reverse drive mechanism of a driving force transmitting device for a vehicle according to the invention will be explained with reference to Figs. 1 through 6 of the attached drawings. A crank shaft 12 of an engine 11 (corresponding to a power source) is connected to a clutch 13. By connecting the clutch 13 with the crank shaft 12, the driving force from the engine 11 is inputted to an input shaft 15 of a transmission 14. The clutch 13 may be structured either to be disconnected by depression of a clutch pedal (not shown) or to be automatically disconnected by an actuator.

The input shaft 15 of the transmission 14 is freely rotatably supported by a pair of bearings 16 and 17. An output shaft 18 disposed in parallel with the input shaft 15 is also freely rotatably supported by a pair of bearings 19 and 20.

On the input shaft 15, a first speed drive gear 21, a second speed drive gear 22, a third speed drive gear 23, a third - fourth speed synchronizing mechanism 24, a fourth speed drive gear 25, a fifth speed drive gear 26, a fifth - sixth speed synchronizing mechanism 27 and a sixth speed drive gear 28 are arranged in order from an engine 11 side.

The first speed drive gear 21 and the second speed drive gear 22 are non-rotatably, i.e., fixedly attached on the input shaft 15, while the third speed drive gear 23, the fourth speed drive gear 25, the fifth speed drive gear 26 and the sixth speed drive gear 28 are idly rotatably (relatively rotatably) attached on the input shaft 15.

As is well known, by slidably moving a synchronizing sleeve 24a of the third - fourth speed synchronizing mechanism 24 n a right direction or in a left direction as viewed in Fig. 1, either the third speed drive gear 23 or the fourth speed drive gear 25 is secured to the input shaft 15.

Further, by slidably moving a synchronizing sleeve 27a of the fifth - sixth speed synchronizing mechanism 27 in a right direction or in a left direction as viewed in Fig. 1, either the fifth speed drive gear 26 or the sixth speed drive gear 28 is secured to the input shaft 15.

On the output shaft 18, a final drive gear 29, a first speed driven gear 30, a first - second speed synchronizing mechanism 31, a second speed driven gear 32, a third speed driven gear 33, a fourth speed driven gear 34, a fifth speed driven gear 35 and a sixth speed driven gear 36 are arranged in order from the engine 11 side.

The final drive gear 29, the third speed driven gear 33, the fourth speed driven gear 34, the fifth speed driven gear 35 and the sixth speed driven gear 36 are fixedly attached on the output shaft 18, while the first speed driven gear 30 and the second speed driven gear 32 are idly rotatably (relatively rotatably) attached on the output shaft 18.

By slidably moving a synchronizing sleeve 31a of the first - second speed synchronizing mechanism 31 in a right direction or in a left direction as viewed in Fig. 1, either the first speed driven gear 30 or the second speed driven gear 32 is secured to the output shaft 18.

Numeral 37 designates a differential gear device and a ring gear 38 of the differential gear 37 is in engagement with the final drive gear 29. The output force of the differential gear device 37 is transmitted to the drive wheels by drive shafts (axle shafts) 41 and 42 which are rotatably supported by bearings 39 and 40, respectively.

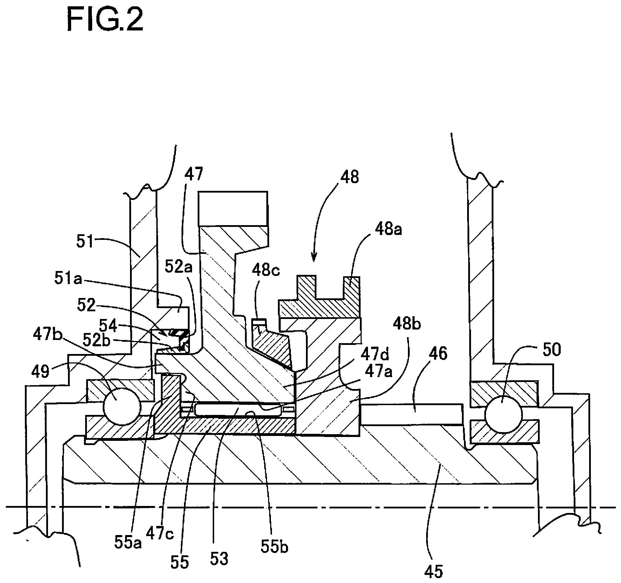

A reverse drive exclusive use shaft 45 is rotatably supported by a pair of bearings 49 and 50. A final drive gear 46, a reverse drive establishing mechanism such as a synchronizing mechanism 48 for a reverse drive, and a reverse drive gear 47 are provided on the reverse drive exclusive use shaft 45 in order from the right side as viewed in Fig. 1 or 2.

As shown in Fig. 2, the final drive gear 46 is secured on the reverse drive exclusive use shaft 45, while the reverse drive gear 47 is idly rotatably (relatively rotatably) provided on the reverse drive exclusive use shaft 45 through a needle bearing 53 and an inner race 55.

As shown in Fig. 2, the synchronizing mechanism 48 for the reverse drive is formed by a synchronizing sleeve 48a, a clutch hub 48b and a synchronizer ring 48c. The clutch hub 48b is coaxially formed with the reverse drive gear 47 and in spline connection with the reverse drive exclusive use shaft 45 for unitary rotation therewith about the axis. The clutch hub 48b is engageable with the reverse drive gear 47 through the synchronizing sleeve 48a. When the clutch hub 48b is engaged with the reverse drive gear 47 through the synchronizing sleeve 48a, the rotation of the reverse drive gear 47 is transmitted to the reverse drive exclusive use shaft 45. As is well known, the synchronizer ring 48c functions to synchronize the rotation of the reverse drive gear 47 and the rotation of the synchronizing sleeve 48a.

By slidably moving the synchronizing sleeve 48a of the synchronizing mechanism 48 for a reverse drive in a left direction as viewed in Fig. 2, the reverse drive gear 47 is secured to the reverse drive exclusive use shaft 45. The final drive gear 46 is engaged with the ring gear 38 of the differential device 37.

The reverse drive exclusive use shaft 45 is arranged close to the output shaft 18 of the transmission 14 and the first speed driven gear 30 and the reverse drive gear 47 are always in engagement with each other. Accordingly, the reverse drive gear 47 is rotatably connected to the input shaft 15 of the transmission 14 through the first speed driven gear 30 and the first speed drive gear 21 which is always in engagement with the first speed driven gear 30. A case 51 of the driving force transmitting device for the vehicle is shown in Figs. 1, 2 and 6. The case 51 is prepared by, for example, an aluminum die casting. This case 51 corresponds to the case defined in the invention.

The operation of the driving force transmitting device for the vehicle shown in Fig. 1 will be explained hereinafter. The driving force transmitting by the forward drive first speed stage through the forward drive sixth speed stage is the same with the driving force transmission by a well known manual transmission and therefore the explanation thereof is omitted here.

When the vehicle is running with the reverse drive gear, the first - second speed synchronizing mechanism 31 is not operated and the first speed driven gear 30 attached to the output shaft 18 in idle rotation therewith is utilized as a reverse drive idle gear. Further, the synchronizing sleeve 48a of the synchronizing mechanism 48 for the reverse drive is moved in the left direction as viewed in Fig. 2 and fixes the reverse drive gear 47 to the reverse drive exclusive use shaft 45.

The driving force of the engine 11 is transmitted to the drive wheels 43 and 44 through the input shaft 15, the first speed drive gear 21, the first speed driven gear (as the reverse drive idle gear) 30, the reverse drive gear 47, the reverse drive exclusive use shaft 45, the final drive gear 46 and the ring gear 38 of the differential device 37.

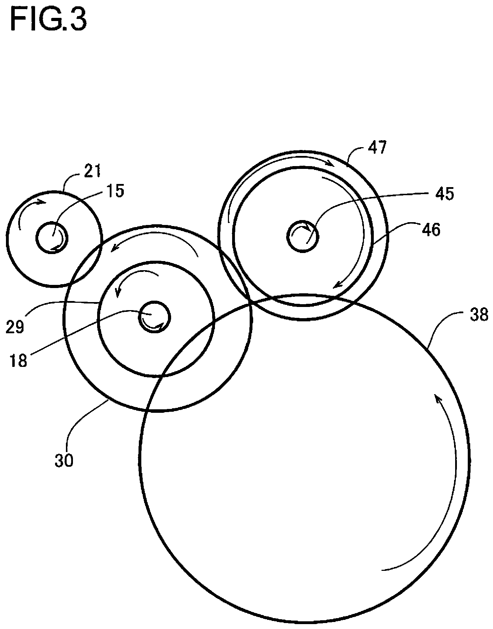

Thus, as shown in Fig. 3, when the vehicle is running with the reverse drive gear, the positive rotation (clockwise rotation) at the first speed drive gear 21 becomes reverse rotation (counterclockwise rotation) at the reverse drive idle gear 30 (first speed driven gear) and becomes the positive rotation (clockwise rotation) at the reverse drive gear 47 and the final drive gear 46. Therefore, the rotation at the ring gear 38 of the differential device 37 becomes the reverse rotation (counterclockwise rotation).

On the other hand, when the vehicle is running with a forward drive speed, since the synchronizing mechanism 48 for the reverse drive is not operated, the reverse drive gear 47 which is always in engagement with the first speed driven gear 30 is idly rotated relative to the reverse drive exclusive use shaft 45 (relative rotation). When the vehicle is running with a forward drive speed, the driving force from the engine 11 is transmitted to the drive wheels 43 and 44 through the input shaft 15, any of the drive gears 21, 22, 23, 25, 26 and 28 and the driven gears 30, 32, 33, 34, 35 and 36 which correspond to the forward drive speed stage, the output shaft 18, the final drive gear 29 and the ring gear 38 of the differential device 37. Since the rotation of the ring gear 38 of the differential device 37 through the transmission of the driving force under the forward drive speed running is transmitted to the reverse drive exclusive use shaft 45 by the final drive gear 46, the reverse drive exclusive use shaft 45 is in rotational state when the vehicle is running with a forward drive speed. It is noted here that the first speed drive gear 21 is fixed to the input shaft 15 and accordingly, the rotation of the input shaft 15 is transmitted to the first speed driven gear 30 which is in engagement with the first speed drive gear 21 when the vehicle is running with a forward drive speed.

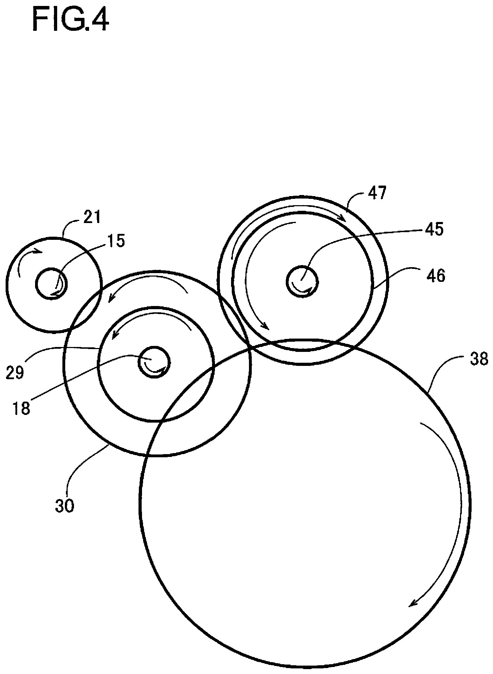

Therefore, as shown in Fig. 4, when the vehicle is running with a forward drive speed, the positive rotation (clockwise rotation) at the first speed drive gear 21 becomes reverse rotation (counterclockwise rotation) at the first speed driven gear 30 and becomes the positive rotation (clockwise rotation) at the reverse drive gear 47. When the vehicle is running with forward drive speed, the ring gear 38 of the differential device 37 is rotated in a positive rotational direction (clockwise rotation) which is the same rotational direction with the first speed drive gear 21 which is fixed to the input shaft 15. The rotation of the final drive gear 46 and the reverse drive exclusive use shaft 45 becomes reverse rotation (counterclockwise rotation).

As explained above, since the reverse drive gear 47 which is always in engagement with the first speed driven gear 30 is idly rotatable relative to the reverse drive exclusive use shaft 45 (relative rotation) when the vehicle is running with a forward drive speed, there would be a vibration in a radial direction and an abnormal noise such as tooth hammering noise derived thereby at the reverse drive gear 47.

According to the reverse drive mechanism of the driving force transmitting device for a vehicle according to the embodiment of the invention, as shown in Figs. 1 and 2, a friction damper 52 which applies a backlash reducing torque to the reverse drive gear 47 is interposed between the case 51 of the driving force transmitting device for the vehicle and the reverse drive exclusive use shaft 45. Therefore, an occurrence of a vibration in a radial direction and an abnormal noise such as tooth hammering noise derived from the vibration at the reverse drive gear 47 due to the backlash of the reverse drive gear 47 can be suppressed or prevented.

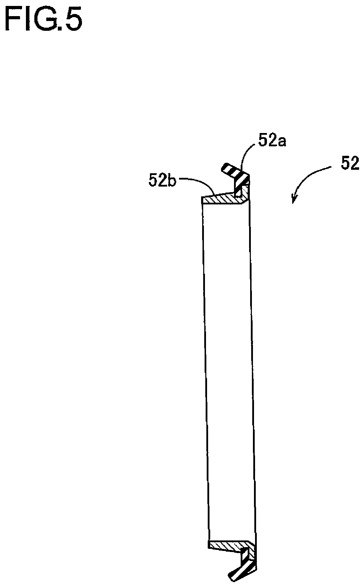

The friction damper 52 is formed to be of a cylindrical shape as shown in Fig. 5 and is provided with a lip portion 52a having an elasticity made of a rubber or a synthetic resin or the like at an outer peripheral side thereof and further provided with a base portion 52b having a rigidity formed by press-forming at an inner peripheral side thereof.

In order to interpose the friction damper 52 between the case 51 of the driving force transmitting device for the vehicle and the reverse drive exclusive use shaft 45, a case extending portion 51a (corresponding to a first holding portion) extending towards the reverse drive gear 47 in an axial line direction from the case 51 as shown in Fig. 2 is provided inside of the case 51.

As shown in Fig. 2, a gear extending portion 47b (corresponding to a second holding portion) extending from the reverse drive gear 47 in an axial line direction towards the case extending portion 51a to oppose thereto is provided at the reverse drive gear 47. The gear extending portion 47b is structured to be in coaxial with the case extending portion 51a. The friction damper 52 is disposed in a damper installing portion 54 formed in a radial space between the case extending portion 51a and the gear extending portion 47b.

An inner peripheral portion (corresponding to the inner peripheral side of the friction damper) of the base portion 52b of the friction damper 52 is press-fitted to an outer peripheral surface of the gear extending portion 47b of the reverse drive gear 47 to be held on the reverse drive gear 47 and an outer peripheral portion (corresponding to an outer periphery of the friction damper 52) of the lip portion 52a is compressively in contact with an inner peripheral surface of the case extending portion 51a to be held on the case extending portion 51a. Accordingly, a backlash reducing torque is generated by a friction occurred upon slidable movement on the compressive contacting surface between the friction damper 52 and the reverse drive gear 47 and the backlash reducing torque is applied on the reverse drive gear 47 to prevent an occurrence of a backlash at the reverse drive gear 47. Thus, the generation of a vibration in a radial direction and an abnormal noise, such as tooth hammering noise, derived from such vibration at the reverse drive gear 47 can be prevented.

Since the friction damper 52 is interposed between the reverse drive gear 47 and the case 51, a relative rotational speed difference between the reverse drive gear 47 and the case 51 becomes extremely small due to the case 51 being fixed and in a non-rotational state, for example, the relative rotational speed difference drops to 2000 rpm in the absolute value. As a result, the friction damper 52 is interposed between the reverse drive gear 47 and the case 51 where the relative rotational speed difference is extremely small and heat generation as well as wear of the friction damper 52 can be suppressed to improve the heat resistance characteristics and the durability.

According to the structure as shown in Fig. 2, the friction damper 52 is disposed between the reverse drive gear 47 and the case 51 of the driving force transmitting device for the vehicle, i.e., the structure where the friction damper 52 is positioned at one end side of the reverse drive exclusive use shaft 45 in an axial line direction thereof, the restriction of shifting of the reverse drive gear 47 in an axial direction is made by the clutch hub 48b and the bearing 49 which radial length size is short. This shifting restriction in the axial direction may not be sufficiently made by the clutch hub 48b and the bearing 49 with short radial length. Therefore, according to the reverse drive mechanism of the driving force transmitting device for a vehicle, as shown in Fig. 2, an inner race 55 is provided between the reverse drive exclusive use shaft 45 and the reverse drive gear 47 in a radial direction and a flange portion 55a is provided at the inner race 55 which extends from the inner race 55 outwardly in a radial direction to be in contact with one end side 47c of the reverse drive gear 47 in an axial line direction. The other end side 47d of the reverse drive gear 47 in the axial line direction thereof is in contact with the clutch hub 48b of the synchronizing mechanism 48 for the reverse drive.

According to the structure explained above, the restriction of axial shifting of the reverse drive gear 47 can be surely achieved by the clutch hub 48b of the synchronizing mechanism 48 for the reverse drive and the flange portion 55a of the inner race 55. It is noted that the needle bearing 53 is disposed between an outer peripheral surface 55b of the inner race 55 and an inner peripheral surface 47a of the reverse drive gear 47 according to the provision of the inner race 55.

According to the embodiment explained above in Fig. 2, the friction damper 52 secured to the reverse drive gear 47 is held to the case extending portion 51a in such a manner that the outer peripheral portion of the lip portion 52a is radially compressively in contact with the inner peripheral surface of the case extending portion 51a. However, alternatively, it may be structured that the friction damper 52 is held by the case 51 in such a manner that the lip portion 52a of the friction damper 52 is compressively brought into contact with the case 51 in an axial direction. By the alternative structure, a backlash reducing torque can be generated by the friction damper 52 and such torque is applied to the reverse drive gear 47 to prevent the backlash at the reverse drive gear 47.

According to the embodiment explained above in Fig. 2, the friction damper 52 is provided with the lip portion 52a at the outer peripheral side and the base portion 52b at the inner peripheral side, wherein the inner peripheral portion of the base portion 52b is held by the gear extending portion 47b and the outer peripheral portion of the lip portion 52a is held by the case extending portion 51a. However, the invention is not limited to this structure and it may be possible to change the structure of the friction damper 52 to have the lip portion 52a at the inner peripheral side and the base portion 52b at the outer peripheral side, wherein the outer peripheral portion of the base portion 52b is held by the case extending portion 51a and the inner peripheral portion of the lip portion 52a is held by the gear extending portion 47b.

According to the embodiment explained above in Fig. 2, the case extending portion 51a is provided radially outward from the gear extending portion 47b. However, it is possible to structure that the case extending portion 51a is provided radially inward from the gear extending portion 47b.

According to the embodiment explained above in Fig. 2, in order to interpose the friction damper 52, the damper installing portion 54 is provided between the case extending portion 51a provided at the case 51 and extending from the case 51 in an axial line direction of the reverse drive exclusive use shaft 45 towards the reverse drive gear 47 and the gear extending portion 47b provided coaxially with the case extending portion 51a at the reverse drive gear 47 extending from the reverse drive gear 47 in an axial line direction towards the case extending portion 51a to oppose thereto . However, the structure is not limited to this and it may be possible to provide for example a recessed portion at the case 51 and the gear extending portion 47b extending from the reverse drive gear 47 is provided to be inserted into the recessed portion of the case 51 to form the damper installing portion 54.

According to the reverse drive mechanism of the driving force transmitting device for a vehicle according to the embodiment of the invention, an example is made for a manual transmission (MT), but it is not limited to this transmission and the invention is applicable to an automated manual transmission including a twin clutch type transmission (DCT) which is a manual transmission with automated speed change.

According to the embodiment of the invention, the reverse drive mechanism of the driving force transmitting device for a vehicle is provided with the case 51, the drive wheel 43, 44 to which the driving force is transmitted from the driving force source 11 through the transmission 14, the reverse drive gear 47 which is rotatably connected to the input shaft 15 of the transmission 14, the reverse drive exclusive use shaft 45 rotatably connected to the drive wheels 43, 44 for supporting the reverse drive gear 47, allowing the relative rotation therewith when the transmission 14 is in the forward drive speed stage and is connected to the reverse drive gear 47 through the reverse drive establishing mechanism 48 when the transmission 14 is in the reverse drive stage and the friction damper 52 interposed between the reverse drive gear 47 and the case 51 for applying the backlash reducing torque to the reverse drive gear 47. According to the embodiment of the invention, since the friction damper 52 is interposed between the reverse drive gear 47 and the case 51, the relative rotational speed difference between the reverse drive gear 47 and the case 51 becomes extremely small due to the fixed case 51 which is in the non-rotational, stationary state, for example, the relative rotational speed difference drops to 2000 rpm in the absolute value. As a result, the friction damper 52 is interposed between the reverse drive gear 47 and the case 51 where the relative rotational speed difference is extremely small and heat generation as well as wear of the friction damper 52 can be suppressed to improve the heat resistance characteristics and the durability.

As explained above, according to the embodiment of the invention, the reverse drive mechanism of the driving force transmitting device for a vehicle is provided with the friction damper 52 which is formed to be of cylindrical shape having the outer peripheral side 52a and the inner peripheral side 52b. The reverse drive mechanism further includes the case extending portion (the first holding portion) 51a provided at the case 51 for holding the outer peripheral side 52a of the friction damper 52 or the inner peripheral side 52b of the friction damper 52 and the gear extending portion (the second holding portion) 47b provided at the reverse drive gear 47 for holding the inner peripheral side 52b of the friction damper 52 or the outer peripheral side 52a of the friction damper 52. Accordingly, installation of the friction damper 52 between the reverse drive gear 47 and the case 51 can be easily performed.

As explained above, according to the embodiment of the invention, the reverse drive mechanism of the driving force transmitting device for a vehicle is structured in such a manner that the friction damper 52 is provided at one end side of the reverse drive gear 47 in the axial line direction of the reverse drive exclusive use shaft 45 and the inner race 55 is interposed between the reverse drive exclusive use shaft 45 and the reverse drive gear 47 in the radial direction, wherein the inner race 55 is provided with the flange portion 55a which is in contact with one end side of the reverse drive gear 47 in the axial line direction of the reverse drive exclusive use shaft 45 and wherein the clutch hub 48b of the reverse drive establishing mechanism 48 is brought into contact with the other end side of the reverse drive gear 47 in the axial line direction of the reverse drive exclusive use shaft 45. Thus, the restriction of the axial shifting of the reverse drive gear 47 can be surely performed at the flange portion 55a of the inner race 55 and the reverse drive establishing mechanism 48.

As explained above, according to the embodiment of the invention, the reverse drive mechanism of the driving force transmitting device for a vehicle is structured in such a manner that the case extending portion (first holding portion) 51a extends from the case 51 in the axial line direction relative to the reverse drive exclusive use shaft 45 and the gear extending portion (second holding portion) 47b extends from the reverse drive gear 47 in the axial line direction relative to the reverse drive exclusive use shaft 45 to oppose to the case extending portion (first holding portion) 51a. According to the structure, the position of the friction damper 52 to be installed can be freely decided in the radial direction. Thus, a freedom of positioning of the friction damper 52 can be improved.

Obviously, numerous modifications and variations of the present invention are possible in light of the above teachings. It is therefore to be understood that within the scope of the appended claims, the present invention may be practiced otherwise than as specifically described herein.

### EXPLANATION OF REFERENCE NUMERALS

In the drawings:
10: engine (driving force source) , 14: transmission, 15: input shaft, 42, 43: drive wheel, 45: reverse drive exclusive use shaft, 47: reverse drive gear, 47a: gear extending portion (second holding portion), 48: synchronizing mechanism for reverse drive (reverse drive establishing mechanism), 48b: clutch hub, 51: case, 51a: case extending portion (first holding portion), 52: friction damper, 55: inner race, 55a: flange portion.

## Claims

1. A reverse drive mechanism of a driving force transmitting device for a vehicle comprising:
a case (51);
a drive wheel (43, 44) to which a driving force is transmitted from a driving force source (11) through a transmission (14);
a reverse drive gear (47) which is rotatably connected to an input shaft (15) of the transmission (14);
a reverse drive exclusive use shaft (45) rotatably connected to the drive wheel (43, 44) for supporting the reverse drive gear (47), a relative rotation being allowed therewith when the transmission (14) is in a forward drive speed stage and the reverse drive exclusive use shaft being connected to the reverse drive gear (47) through a reverse drive establishing mechanism (48) when the transmission (14) is in a reverse drive stage; and
**characterized by** comprising a friction damper (52) interposed between the reverse drive gear (47) and the case (51) for applying a backlash reducing torque to the reverse drive gear (47), wherein the friction damper (52) is formed to be of cylindrical shape having an outer peripheral side (52a) and an inner peripheral side (52b) and wherein the reverse drive mechanism further includes a first holding portion (51a) provided at the case (51) for holding the outer peripheral side (52a) of the friction damper (52) and a second holding portion (47b) provided at the reverse drive gear (47) for holding the inner peripheral side (52a) of the friction damper (52).

2. The reverse drive mechanism of the driving force transmitting device for a vehicle according to claim 1, wherein the friction damper (52) is provided at one end side of the reverse drive gear (47) in an axial line direction of the reverse drive exclusive use shaft (45) and an inner race (55) is interposed between the reverse drive exclusive use shaft (45) and the reverse drive gear (47) in a radial direction, and wherein the inner race (55) is provided with a flange portion (55a) which is in contact with the one end side of the reverse drive gear (47) in an axial line direction of the reverse drive exclusive use shaft (45) and a clutch hub (48b) of the reverse drive establishing mechanism (48) is brought into contact with another end side of the reverse drive gear (47) in an axial line direction of the reverse drive exclusive use shaft (45).

3. The reverse drive mechanism of the driving force transmitting device for a vehicle according to claim 1 or 2, wherein the first holding portion (51a) extends from the case (51) in an axial line direction of the reverse drive exclusive use shaft (45) and the second holding portion (47b) extends from the reverse drive gear (47) in the axial line direction of the reverse drive exclusive use shaft (45) to oppose to the first holding portion (51a).

## Patentansprüche

1. Rückwärtsantriebsmechanismus einer Antriebskraftübertragungsvorrichtung für ein Fahrzeug, umfassend:
ein Gehäuse (51),
ein Antriebsrad (43, 44), auf das eine Antriebskraft von einer Antriebskraftquelle (11) über ein Getriebe (14) übertragen wird,
ein Rückwärtsantriebsrad (47), das mit einer Eingangswelle (15) des Getriebes (14) drehbar verbunden ist,
eine ausschließlich für Rückwärtsantrieb verwendete Welle (45), die mit dem Antriebsrad (43, 44) drehbar verbunden ist, zum Tragen des Rückwärtsantriebsrades (47), wobei eine relative Drehung damit ermöglicht wird, wenn sich das Getriebe (14) in einer Vorwärtsantriebsgangstufe befindet, und die ausschließlich für Rückwärtsantrieb verwendete Welle durch einen Rückwärtsantriebsherstellmechanismus (48) mit dem Rückwärtsantriebsrad (47) verbunden ist, wenn sich das Getriebe (14) in einer Rückwärtsantriebsstufe befindet, und
**gekennzeichnet durch** Umfassen eines Reibungsdämpfers (52), der zwischen dem Rückwärtsantriebsrad (47) und dem Gehäuse (51) angeordnet ist, zum Ausüben eines Spielverminderungsdrehmoments auf das Rückwärtsantriebsrad (47), wobei der Reibungsdämpfer (52) derart ausgebildet ist, dass er eine zylindrische Form mit einer Außenumfangsseite (52a) und einer Innenumfangsseite (52b) aufweist, und wobei der Rückwärtsantriebsmechanismus ferner einen ersten Halteabschnitt (51a), der an dem Gehäuse (51) bereitgestellt ist, zum Halten der Außenumfangsseite (52a) des Reibungsdämpfers (52) und einen zweiten Halteabschnitt (47b), der an dem Rückwärtsantriebsrad (47) bereitgestellt ist, zum Halten der Innenumfangsseite (52a) des Reibungsdämpfers (52) umfasst.

2. Rückwärtsantriebsmechanismus der Antriebskraftübertragungsvorrichtung für ein Fahrzeug nach Anspruch 1, wobei der Reibungsdämpfer (52) an einer Endseite des Rückwärtsantriebsrades (47) in einer Axiallinienrichtung der ausschließlich für Rückwärtsantrieb verwendeten Welle (45) bereitgestellt ist und eine innere Laufbahn (55) zwischen der ausschließlich für Rückwärtsantrieb verwendeten Welle (45) und dem Rückwärtsantriebsrad (47) in einer radialen Richtung angeordnet ist, und wobei die innere Laufbahn (55) mit einem Flanschabschnitt (55a) versehen ist, der mit der einen Endseite des Rückwärtsantriebsrades (47) in einer Axiallinienrichtung der ausschließlich für Rückwärtsantrieb verwendeten Welle (45) in Kontakt ist und eine Kupplungsnabe (48b) des Rückwärtsantriebsherstellmechanismus (48) mit einer anderen Endseite des Rückwärtsantriebsrades (47) in einer Axiallinienrichtung der ausschließlich für Rückwärtsantrieb verwendeten Welle (45) in Kontakt gebracht wird.

3. Rückwärtsantriebsmechanismus der Antriebskraftübertragungsvorrichtung für ein Fahrzeug nach Anspruch 1 oder 2, wobei sich der erste Halteabschnitt (51a) von dem Gehäuse (51) in einer Axiallinienrichtung der ausschließlich für Rückwärtsantrieb verwendeten Welle (45) erstreckt und sich der zweite Halteabschnitt (47b) derart von dem Rückwärtsantriebsrad (47) in der Axiallinienrichtung der ausschließlich für Rückwärtsantrieb verwendeten Welle (45) erstreckt, dass er dem ersten Halteabschnitt (51a) entgegengesetzt ist.

## Revendications

1. Mécanisme de marche arrière d'un dispositif de transmission de force d'entraînement pour un véhicule comprenant :
un carter (51) ;
une roue motrice (43, 44) à laquelle une force d'entraînement est transmise par une source de force d'entraînement (11) par le biais d'une transmission (14) ;
un engrenage de marche arrière (47) qui est raccordé, en rotation, à un arbre d'entrée (15) de la transmission (14) ;
un arbre à usage exclusif pour marche arrière (45) raccordé en rotation à la roue motrice (43, 44) pour supporter l'engrenage de marche arrière (47), une rotation relative étant autorisée avec ce dernier lorsque la transmission (14) est dans un étage de vitesse de marche avant, et l'arbre à usage exclusif pour marche arrière étant raccordé à l'engrenage de marche arrière (47) par le biais d'un mécanisme d'établissement de marche arrière (48) lorsque la transmission (14) est dans un étage de marche arrière ; et
**caractérisé en ce qu'**il comprend un amortisseur à friction (52) intercalé entre l'engrenage de marche arrière (47) et le carter (51) pour appliquer un couple de réduction de jeu sur l'engrenage de marche arrière (47), dans lequel l'amortisseur à friction (52) est formé pour être de forme cylindrique ayant un côté périphérique externe (52a) et un côté périphérique interne (52b) et dans lequel le mécanisme de marche arrière comprend en outre une première partie de support (51a) prévue au niveau du carter (51) pour supporter le côté périphérique externe (52a) de l'amortisseur à friction (52) et une seconde partie de support (47b) prévue au niveau de l'engrenage de marche arrière (47) pour supporter le côté périphérique interne (52a) de l'amortisseur à friction (52).

2. Mécanisme de marche arrière d'un dispositif de transmission de force d'entraînement pour un véhicule selon la revendication 1, dans lequel l'amortisseur à friction (52) est prévu au niveau d'un côté d'extrémité de l'engrenage de marche arrière (47) dans une direction de ligne axiale de l'arbre à usage exclusif pour marche arrière (45) et un chemin interne (55) est intercalé entre l'arbre à usage exclusif pour marche arrière (45) et l'engrenage de marche arrière (47) dans une direction radiale, et dans lequel le chemin interne (55) est prévu avec une partie de bride (55a) qui est en contact avec le un côté d'extrémité de l'engrenage de marche arrière (47) dans une direction de ligne axiale de l'arbre à usage exclusif pour marche arrière (45) et un moyeu d'embrayage (48b) du mécanisme d'établissement de marche arrière (48) est amené en contact avec un autre côté d'extrémité de l'engrenage de marche arrière (47) dans une direction de ligne axiale de l'arbre à usage exclusif pour marche arrière (45).

3. Mécanisme de marche arrière d'un dispositif de transmission de force d'entraînement pour un véhicule selon la revendication 1 ou 2, dans lequel la première partie de support (51a) s'étend à partir du carter (51) dans une direction de ligne axiale de l'arbre à usage exclusif pour marche arrière (45) et la seconde partie de support (47b) s'étend à partir de l'engrenage de marche arrière (47) dans la direction de ligne axiale de l'arbre à usage exclusif pour marche arrière (45) pour s'opposer à la première partie de support (51a).
